# EUROPEAN PATENT APPLICATION

(11) **EP 0 616 911 A2**
(43) Date of publication of application: **28.09.1994**
(21) Application number: 94104582.5
(22) Date of filing: 23.03.1994
(51) Int. Cl.: B60C 29/02, B60B 21/12

(54) **Arrangement for inflating tubeless wheels**

(30) Priority: 26.03.1993 ES 9300834
(71) Applicant: Nadal Aloy, Jorge, E-08960 Sant Just Desvern (Barcelona) (ES)
(72) Inventor: Nadal Aloy, Jorge, E-08960 Sant Just Desvern (Barcelona) (ES)
(74) Representative: Bosotti, Luciano

(57) **Abstract**

In an arrangement for inflating tubeless wheels, the air-proofing band (2) housed in the rim comprises a tyre inflating valve (1) as an integral part thereto forming up a single piece, said valve being inserted into a rim hole (3) and positioned by any conventional clamp-tightening means, with a nut or by pressure.

## Description

The present invention refers to an arrangement for inflating tubeless wheels.

More particularly, this invention refers to an arrangement directed to inflating tubeless wheels of bicycles and the like and is characterised in that the air inlet valve is an integral part of the air-proofing rubber band used.

In Spanish utility models Nos.8600785 and 9300686 the use of air-proofing rubber bands for bicycle wheels is disclosed, said bands making up an elastic belt which is clung to on the spoke heads setting up a sealing closure allowing thus to leave out the conventional tube.

In these wheels, the prior art tyre inflating valve is presently used and said valve requires a manual insertion.

This valve and the coupling operation, even though effective enough as to their performance, have several drawbacks regarding mass production and assembly.

Basically they are:
Valve and rubber band, as two specific pieces are essentially required, and subsequently too one must have stocks of both readily available with also handling replication.

The rubber band hole during assembly must be well mated with the one at the rim and the valve be then inserted.

The valve shall carefully be clamp-tightened against the rim with a nut for obtaining a perfect sealing between the valve head and the rubber, this being set up as a critical air-proofing area.

Even as a small percentage, any mistake in the above-mentioned clamp-tightening meant that at any repairs all the tyre, rubber and valve unit shall be detachably removed because the clamp-tightening cannot previously be detected and only until the tyre is actually inflated, and re-assembly thereby means an additional production cost.

To avoid all these drawbacks, this arrangement for inflating tubeless wheels, being the object of the present invention, has been devised and in this arrangement the valve is an integral part of the rubber band making up a single piece, the main advantages disclosed hereinafter are thus obtained with the present arrangement.

To have a single piece for inflating and sealing, with stocks effective cost-cutting and handling reduction, consequently a cost-effective turnout.

Easiness in the band assembly because the valve shall be inserted in the above-mentioned hole, the present prior art assembly costs are thus remarkably cut down.

To be able to make a usual clamp-tightening with a nut or by pressure since not any air-proofing relies on the former as there is not any critical area, and costs are thereby again cut down.

The remarkable underlying cost-cutting in the valve body.

To facilitate a more detailed description of the present invention, reference is being made to the appended drawings, wherein is disclosed a preferred embodiment only by way of a non-exhaustive example.

In the drawings:

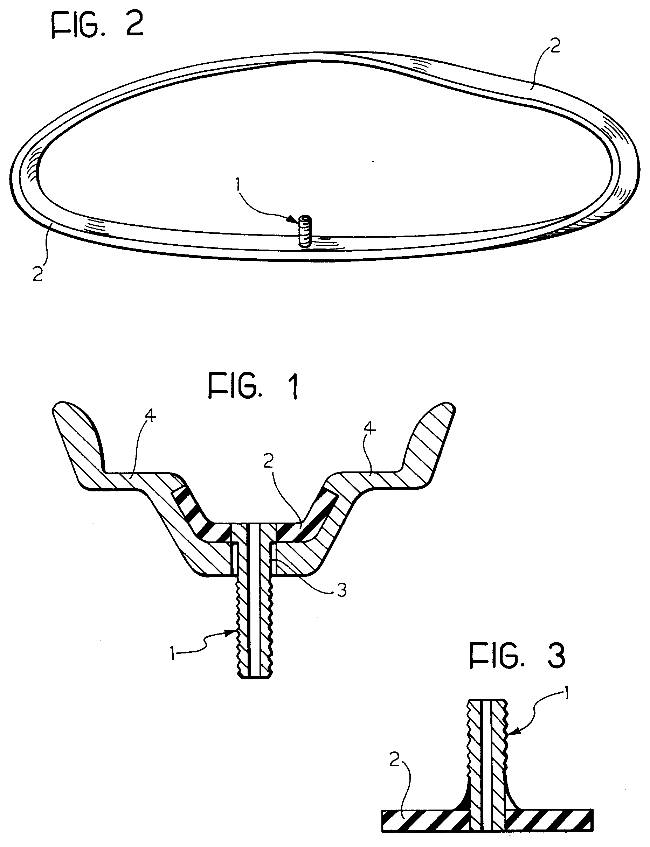

- fig.1 shows a schematic profile and cross-sectioned view of the arrangement of the present invention,
- fig.2 represents a perspective view showing a rubber band with the valve making up an integral part of the band,
- fig.3 shows a cross-sectioned detail of said valve.

Returning again to the figures, in this embodiment as illustrated can be noted that a valve 1 making up an integral part of the rubber band 2 is forming up a single piece.

Valve 1 is inserted into hole 3 of the rim 4 comprising, the latter the rubber band and is being positioned with a conventional clamp-tightening action, such as with a nut or by pressure.

## Claims

1. Arrangement for inflating tubeless wheels, essentially characterised in that the air-proofing band (2) housed in the rim comprises a tyre inflating valve (1) as an integral part thereto forming up a single piece, said valve being inserted into a rim hole (3) and positioned by any conventional clamp-tightening means, with a nut or by pressure.
